Europäisches Patentamt

**European Patent Office**

Office européen des brevets

(11) Publication number: **0 186 355**
**A2**

(12) # EUROPEAN PATENT APPLICATION

(21) Application number: **85308891.2**

(22) Date of filing: **06.12.85**

(51) Int. Cl.⁴: **F 16 F 9/46**
**B 60 G 17/00**

(30) Priority: **24.12.84 US 685857**

(43) Date of publication of application:
**02.07.86 Bulletin 86/27**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Spisak, Andrew Michael**
**8051 Glenwood Avenue**
**Youngstown Ohio 44512(US)**

(72) Inventor: **Adduci, Robert Louis**
**1612 Shannon Road**
**Girard Ohio 44420(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) **Hydraulic damper.**

(57) An adaptive ride air suspension strut (10) includes an internal actuator (102) disposed within a hollow piston rod (26) and operatively connected to a computer-type control system (161) through an electrical bulkhead (114) and high pressure seal (140) by electrical cables (134) leading upwardly therefrom through a wire routing and sealing type dress cap (146) fitted to the hollow end (46) of the piston rod to guide and direct the cables to a plug (160) electrically connected to the control system.

./...

CONTROL
SYSTEM

Fig. 1

# HYDRAULIC DAMPER

This invention relates to a hydraulic damper as specified in the preamble of claim 1, for example as disclosed in US-A-3 420 341.

Prior to the present invention, various types of hydraulic shock absorber and strut units have had operator-controlled variable-damping capability to provide the vehicle operator with a selective ride to suit road conditions or meet operator requirements. Although such suspension units have provided ride control, they generally require bulky external electrical or mechanical actuators, control systems and cable routings which do not meet current standards for compactness and high-precision control.

Thus in the said US-A-3 420 341 the variable-damping capability involves the use of an externally mounted control means 80 for mechanically, electrically or electromechanically rotating a control rod 60 a limited amount within a hollow piston rod 50, for varying the rotary position of a valved and ported lower piston half 86.

The present invention is concerned with the provision of an adaptive ride hydraulic damper, which may be a suspension strut or shock absorber unit, having controlled variable damping capability and with new and improved hydraulic sealing and electrical connections to an internal electrically energizable actuator for varying the damping characteristics of the damper.

The present invention is also concerned with the provision of a highly compact hydraulic damper, which may be a suspension strut or shock absorber unit, having an electrically energizable actuator disposed internally of the hydraulic unit, specifically internally of a hollow piston rod, and effective in operation to precisely control and vary flow control orificing of the piston as it strokes in an oil-filled cylinder tube to damp suspension spring action.

To these ends a hydraulic damper in accordance with the present invention is characterised by the features specified in the characterising portion of claim 1.

The present invention thereby makes it possible to achieve improved control of the variable damping characteristics of the valving of a hydraulic damper, which may be in the form of a suspension strut or shock absorber unit, and to obtain new and improved connection and routing of electrical cables into an internal electrically energizable actuator disposed in the damper so that the outer configuration of the suspension strut or shock absorber is not materially changed, so allowing the hydraulic damper unit to be used on a wide range of vehicles.

A specific feature of the present invention is the provision of a new and improved hydraulic damper having an internal, electrically energizable actuator with improved electrical connection and support of the actuator by an insulated bulkhead that positions and supports the actuator in a hollow piston rod, so as overall to achieve a high-pressure fluid seal.

In the drawings:

Figure 1 is a side elevational view with parts in section of a suspension strut illustrating a preferred embodiment of the present invention;

Figure 2 is a top plan view of Figure 1 on the lines 2--2 of Figure 1;

Figure 3 is an enlarged view partially in section of the upper portion of the suspension strut of Figure 1;

Figure 4 is a cross-sectional view with parts in elevation, of an electrical wiring dress cap on the line 4--4 of Figure 3;

Figure 5 is a sectional view on the line 5--5 of Figure 4, showing the dress cap assembly mounted to the piston rod of the strut; and

Figure 6 is an exploded isometric view of the dress cap and the electrical connection to an actuator within the strut.

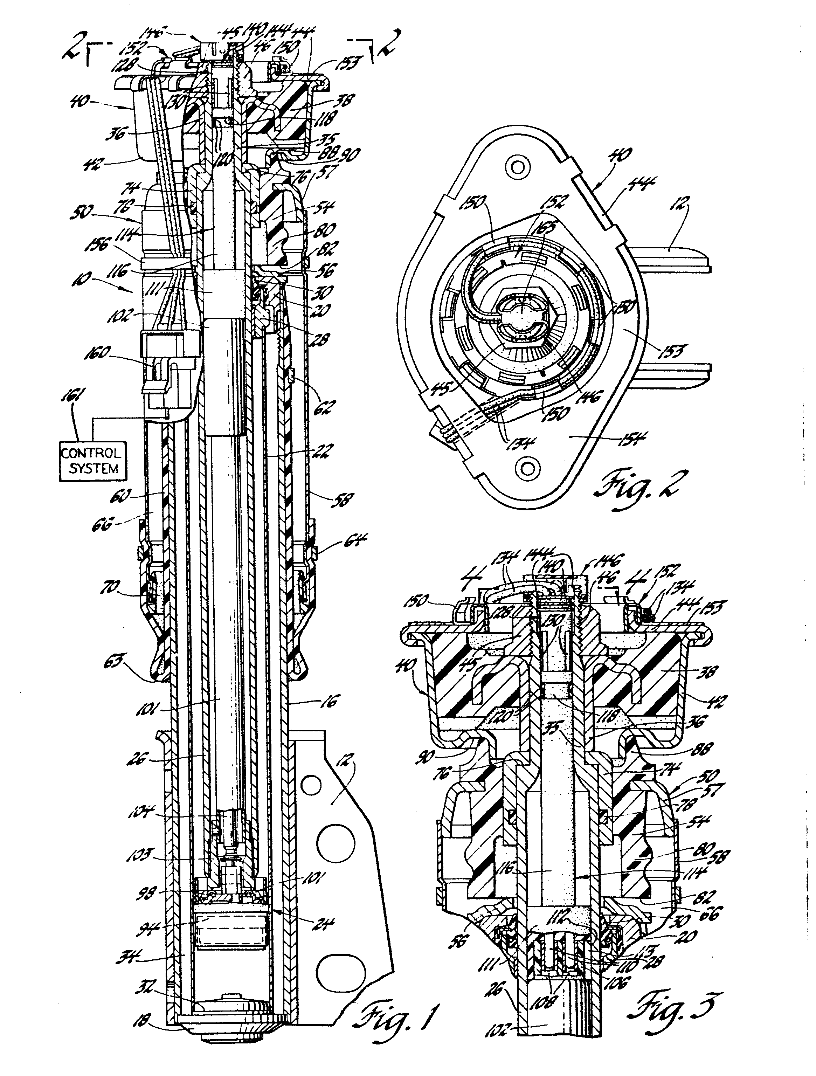

With reference now to the drawings, there is shown in Figure 1 a suspension strut 10 having a bracket 12 at its lower end adapted to be secured to a vehicle road wheel assembly, not illustrated.  More particularly, the strut comprises a hydraulic damper with an elongate outer reservoir tube 16 closed by a lower end cap 18 and secured within a pocket provided by the bracket 12.  The reservoir tube 16 extends upwardly from the bracket to a terminal end cap (seal cover) 20 welded to the upper end of the reservoir tube.  The strut contains an elongate oil-filled cylinder tube 22 which is spaced inwardly from and concentric with the reservoir tube 16 and in which a piston assembly 24 with adjustable valving is mounted for stroking movements.  A hollow piston rod 26 attached at its inner end to the piston assembly 24 extends upwardly therefrom through a rod guide 28 mounted on the upper end of the cylinder tube 22 and held in position by the end cap 20.

An annular elastomeric seal 30 is mounted in the rod guide 28 and has annular sealing contact with the piston rod 26 to prevent loss of hydraulic shock absorber oil from the unit as the piston

0186355

strokes in the cylinder tube during damping operation. A base valve 32 secured to the lower end of the cylinder tube controls the flow of shock absorber oil between the cylinder tube and a fluid reservoir 34 formed between the cylinder tube and the reservoir tube on compression and rebound strokes of the piston for damping action of the suspension spring provided by this unit. The hollow piston rod 26 has a reduced-diameter upper end 35 which carries a metallic connector 36 with an upper flange that is embedded in a toroidal elastomeric isolator cushion 38 of an upper mount assembly 40. This cushion 38 has a low spring rate to dissipate vibratory energy which would otherwise enter the vehicle from the piston assembly 24 as it reciprocates in the cylinder tube to damp suspension spring action. A metallic shell or housing 42 and cover plate 44 partially enclose the isolator cushion 38, as shown in Figure 1. A nut 45 is threaded on to the reduced-diameter and correspondingly threaded upper end 46 of the hollow piston rod 26 to secure the upper mount assembly to the piston rod. Threaded fasteners, not shown, conventionally secure the upper mount assembly to the sheet metal of a mounting tower or other support formed in the body of the vehicle.

A compliant cover plate assembly 50 including a cylindrical jounce bumper 54 of a suitable elastomeric material is secured to an upper end of the hollow piston rod 26 immediately below the upper mount assembly 40. In jounce, this bumper is contacted and deflected by a bumper plate 56 that is welded to the top of the end cap 20 of the hydraulic damper. The compliant cover plate assembly also includes a cup-shaped connector plate 57 of sheet metal having an inner diameter embedded in the jounce bumper and an outer diameter welded to the upper end of the cylindrical steel dust tube 58. The dust tube extends from upper attachment with the plate 57 down and around the reservoir tube in conventional manner.

The strut 10 has an air suspension spring provided by a cylindrical elastomeric air sleeve 60 having its inner, upper end connected to the upper end of the reservoir tube 16 by a constricted clamping ring 62. From this clamping ring the sleeve 60 follows downwardly around the outer periphery of the reservoir tube and is reversely curved intermediate the ends thereof to form a rolling lobe 63. From this lobe, the sleeve extends upwardly and around the lower end of the dust tube 58. A second clamping ring 64 similar to the clamping ring 62 is employed to secure the sleeve to the lower end of the dust tube in an airtight manner. The pneumatic chamber 66 formed by the dust tube, the reservoir tube, the elastomeric air sleeve and the compliant cover plate assembly is charged with pressurized air or other gas to provide a pneumatic suspension spring for vehicle suspension purposes. One system for controlling the pressure within the air spring may be based on the system disclosed in US-A-3 372 919.

Improved operation of the pneumatic suspension spring and extended service life of the elastomeric sleeve 60 result from the addition of an air sleeve guide 70 which is releasably attached to the lower end of the dust tube 58. This guide is a resilient wide torus (ring) of plastics material which has a smooth exterior surface and low-friction engagement with the elastomeric air sleeve 60 to reduce sleeve wear during operation of the strut. The ring-like guide is formed with a central external groove which fits into the outwardly flanged lower end of the dust tube, as shown in Figure 1.

The jounce bumper 54 is bonded at its internal diameter to a generally cylindrical steel insert (jounce bumper stop) 74 which fits over the shoulder 76 provided by the reduced-diameter upper end portion of the hollow piston rod 26. This insert (stop) 74 contacts the lower end of the connector 36 and has an inner annular groove therein which receives an elastomeric O-ring 78 that forms a static seal which sealingly engages the piston rod 26 to prevent air leakage past the jounce bumper. The jounce bumper 54 has a downwardly extending skirt 80 with convolutions that terminate in a lower annular end surface 82. On jounce, the bumper skirt 80 is deflected as the contact plate 56 engages the end surface 82 and moves towards the jounce bumper stop 74. Jounce movement is further retarded by the engagement of the end of the stop 74 with the plate 56. In addition to providing a jounce function, the cover plate assembly 50 forms a compliant upper end and seal for the air spring provided by the pressurized pneumatic chamber 66. A collar-like upper end 88 of the jounce bumper assembly 54 has an end surface that seats against the lower surface 90 of the metallic shell 42 of the upper mount assembly 40.

In this preferred construction, the piston rod 26 is connected to the isolator cushion 38 so that hydraulic forces generated by the piston as it strokes in the cylinder tube of the strut will be primarily routed to and dissipated by the isolator cushion 38, which preferably has a lower spring rate than that of the jounce bumper 54. This substantially reduces the transmittal of road shocks by the piston rod to the passenger compartment of the vehicle, so materially contributing to the comfort of the operator and the passengers therein.  The suspension spring loads from the air sleeve will be carried through the higher spring rate jounce bumper 54 to the shell-like housing 42 of the upper mount assembly.

The piston assembly 24 provides selective damping rates and preferably has variable deflected-disc valving with flow control orifices therein whose flow size openings can be varied to control the damping characteristics of the strut.  This variable-orifice construction is preferably like that disclosed in EP-A-85 30 5781.8.  Generally, this valving comprises an orifice plate 94 fixed in the piston shell with flow openings therethrough. Mounted on top of this orifice plate is a selector plate 98 which is rotatable to any number of positions to control the size of the openings and the flow through the piston for deflection of discs mounted beneath the orifice plate, as described in the said EP-A-85 30 5781.8.  On compression, the fluid in the cylinder tube below the piston 24 will flow through outer restricted passages to force the orifice selector plate upwardly, so deflecting an upper wave spring 101.  Fluid flowing into the cylinder tube above the piston is squeezed through the outer restricted passages to damp rebound or compression stroke, also as described in the said EP-A-85 30 5781.8.

The rotational movement of the selector plate is controlled by an actuator 102 fixed at a predetermined position entirely within the hollow piston rod 26.  A hollow connector tube 101 extends from the actuator 102 within the piston rod 26, and is pinned or otherwise connected to the upstanding neck portion 103 of the piston assembly 24 extending therein, as shown in Figure 1. With such connection, high-pressure damper fluid is present in the hollow piston rod, such that effective fluid sealing of the piston rod, preferably at the upper end thereof, is necessary. The actuator 102 has a rotatable output shaft 104 which extends through the connector tube 101 into driving connection with the rotatable selector plate 98 and is operative to rotate the selector plate to appropriate positions to control the rebound damping characteristics of the strut. The amount of selector plate rotation is a control function that can be manually selected by the operator or automatically selected by computer control in accordance with road conditions.

The upper end of the actuator 102 has a reduced-diameter end portion 106 which has four female terminals 108 for conducting electrical energy into the actuator 102 for operation thereof. The terminals 108 receive the male terminals 110 of a cylindrical support socket 111 formed at the lower end of an elongate insulated bulkhead 114. The socket 111 has a keyway 112 in the wall thereof which fits on a key 113 on the upper end of the actuator 102 to mechanically interlock the actuator to the bulkhead 114.

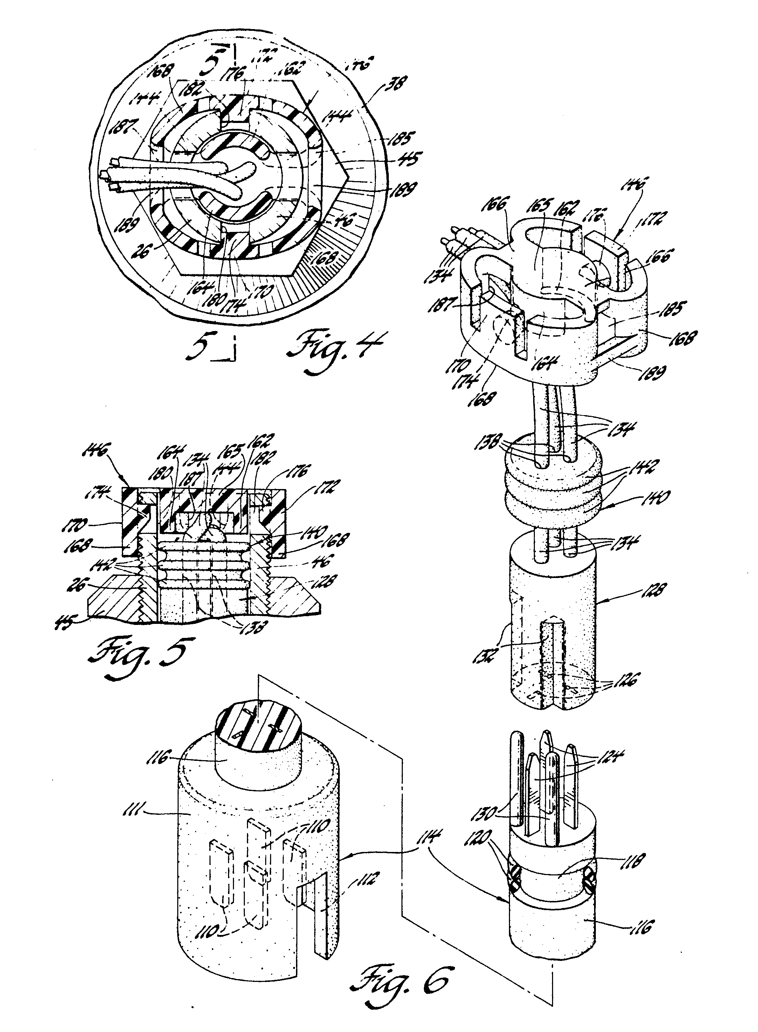

The bulkhead 114 is preferably moulded from glass-reinforced polyester material and is fully compatible with high-temperature damper oils and pressures and other internal environmental forces of the strut. From the plug end, the bulkhead 114 has an elongate stem 116 of a reduced diameter to fit into the reduced-diameter end 35 of the piston rod. The upper end of the stem 116 has an annular groove 118 which carries a pair of O-rings 120. These O-rings are sealingly engaged with the inner wall of the reduced-diameter end 35 of the hollow piston rod, to provide high-pressure sealing of the damper oil. There are three male terminals 124 which bus to the four lower terminals 110. The upper terminals 124 project towards the upper ends of the piston rod, and fit into female terminals 126 of a cylindrical socket 128 that slip-fits in a plug-like fashion into the upper end of the piston rod, as shown in Figures 3 and 5. In addition to the terminals 124, the upper end of the strut bulkhead has a pair of steel, upwardly-projecting locator pins 130 that fit into longitudinally extending grooves 132 moulded into the peripheral surface of the socket 128. These pins interlock with and orient the socket 128 relative to the bulkhead 114, and ensure the electrical connection of these two parts, as is best illustrated in Figure 3.

The female terminals 126 are electrically connected to three electrical cables 134 that project upwardly therefrom through the top of the socket 128 and then through cable sealing holes 138 in an upper cylindrical seal 140. The seal 140 is moulded from a self-lubricating silicone material, and has a plurality of sealing ribs 142 which contact the inner diameter of the piston rod 26 to effectively block the entry of any moisture or any contaminants to the socket 128 and the hollow piston rod.

The dress cap 146 is formed from nylon (polyamide) or other suitable plastics or like material and has a pair of inner arcuate walls 162, 164 which plug into and close the open threaded upper end 46 of the hollow piston rod 26. The walls 162, 164 extend downwardly from the circular centre of an upper bridge 165. The bridge has a pair of cable hold-down bars 166 extending radially from the circular centre to fit into the U-shaped cuts 144 in the threaded upper end portion 46 of the piston rod 26. These bars 166 connect to an outer peripheral wall 168 which has identical locking tabs 170, 172 integrally formed in opposite sides thereof. The locking tabs are like spring fingers and have inwardly extending locking projections 174, 176 which lock within diametrically opposed openings 180, 182 in the piston rod 26. These openings 180, 182 are at right angles to the U-shaped cuts 144 through which the cables 134 extend.

When the dress cap 146 is pressed into the locked position, the seal 138 is forced downwardly so that the plug-like socket 128 is fully engaged with the terminals of the insulated bulkhead 114. The dress cap 146 further protects against and blocks the entry of foreign material into the strut, whilst routing the cables to the wire retainer, as is best seen in Figure 2.

The dress cap 146 in the context of a hydraulic damper forms the subject of EP-A- of even date, based on USSN 685,460.

Claims:

1. A hydraulic damper for connection between sprung and unsprung portions of a wheeled vehicle to damp ride motions of the vehicle, in which a first tubular member (22) has a hydraulic fluid therein and is adapted to be operatively connected to one of the said portions of the vehicle, a piston (24) is operatively mounted in the first tubular member (22) and has valve means (98) movable to selected positions therein to selectively vary and control the flow of fluid therethrough when stroking within the first tubular member (22), to control the damping characteristics of the damper, a hollow piston rod (26) is operatively connected to the piston (24) and extends upwardly through the end of the damper for connection to the other of the said portions of the vehicle, and actuator means (102) is operatively mounted within the hollow piston rod (26) for moving the valve means (98) between the said selected positions thereof, characterised in that, in an arrangement in which the actuator means (102) is electrically energizable and selectively operable by control means (161) that is connected to supply electrical energy to the actuator means (102) by conductor means which extend through the hollow piston rod (26), the conductor means extend through and are mounted in an insulated bulkhead (114) fixed within the hollow piston rod (26) and are electrically connected to the actuator means (102), and seal means (120) is carried by the insulated bulkhead (114) and is in sealing contact with the inner wall of the hollow piston rod (26) to provide fluid sealing of the piston rod (26) to block the escape of fluid from the damper during operation thereof.

2. A hydraulic damper according to claim 1, characterised in that the first tubular member (22) comprises a cylinder tube which is supported within an outer support tube (16) adapted to be operatively connected to one of the said portions of the vehicle, the hollow piston rod (26) comprises a hollow cylindrical piston rod, the insulated bulkhead (114) fixed within the hollow piston rod (26) is of tubular form and includes a plurality of terminals (124) in the upper end thereof which bus to a plurality of terminals (110) in the lower end thereof, the latter terminals (110) being operatively connected to the actuator means (102), and the seal means (120) carried by the insulated bulkhead (114) is disposed adjacent the upper end thereof and is in annular sealing contact with the inner wall of the hollow piston rod (26).

3. A hydraulic damper according to claim 1 or 2, characterised in that the insulated bulkhead (114) is formed with a socket (111) at the lower end thereof fitted on to the upper end of the actuator means (102), and that the seal means (120) carried by the insulated bulkhead (114) comprises resilient seal means effective to provide high-pressure fluid sealing of the hollow piston rod (26).

4. A hydraulic damper according to any one of claims 1 to 3, characterised in that a source of electrical energy is provided for energizing the actuator means (102), with the conductor means operatively connecting the source of electrical energy to the actuator means (102), the conductor means includes electrical cable means (134) leading from the source of electrical energy and terminating in a cylindrical socket (128) for insertion into the upper end of the hollow piston rod (26), the socket (128) having electrical terminals (126) in the lower end thereof, and the insulated bulkhead (114) comprises a cylindrical bulkhead having an upper end with terminals (124) which mate with the terminals (126) of the cylindrical socket (128) and bus to a plurality of terminals (110) on the lower end of the insulated bulkhead (114) for electrical connection to the actuator means (102).

5. A hydraulic damper according to claim 4, characterised in that an upper cylindrical seal (140) of resilient material is deflectable to closely fit into the upper end (46) of the piston rod (26) above the socket (128), the cylindrical seal (140) has a plurality of cable-receiving holes (138) therethrough through which the cable means (134) extend, the cylindrical seal (140) has sealing means (142) on the periphery thereof for sealing engagement with the inner wall of the hollow piston rod (26), and cap means (146) closes the end of the piston rod (26) and guides the cable means (134) outwardly from the upper end (46) of the piston rod (26).

0186355

CONTROL
SYSTEM

Fig. 1

Fig. 2

Fig. 3

Fig. 4

Fig. 5

Fig. 6